# EUROPEAN PATENT SPECIFICATION

(11) **EP 4 086 659 B1**
(45) Date of publication and mention of the grant of the patent: **19.06.2024**
(21) Application number: 20866896.2
(22) Date of filing: 03.01.2020
(51) Int. Cl.: G01S 7/481, G01S 7/484, G01S 7/486, G01S 7/483, G01S 17/42, G01S 7/497

(54) **LIDAR**
LIDAR
LIDAR

(43) Date of publication of application: 09.11.2022
(73) Proprietor: Suteng Innovation Technology Co., Ltd., Shenzhen, Guangdong 518000 (CN)
(72) Inventor: JIANG, Shen, Shenzhen, Guangdong 518000 (CN)
(74) Representative: Ran, Handong
(86) International application number: PCT/CN2020/070252
(87) International publication number: WO 2021/051721

(56) References cited:
- WO-A1-2019/146648
- CN-A- 106 226 757
- CN-A- 109 343 067
- CN-A- 109 375 234
- CN-A- 110 531 369
- CN-U- 208 314 210
- CN-U- 209 606 612
- DE-A1-102014 110 510
- TW-A- 201 928 391
- US-A1- 2019 391 239

## Description

### TECHNICAL FIELD

The present invention relates to the field of measurement, and in particularly, to LiDAR.

### BACKGROUND

LiDAR is a radar system that emits a laser beam to detect the position and speed of an object. The working principle of the LiDAR is to first emit a detection laser beam to the object, then compare signals reflected from the object with emitting signals, and properly process the signals to obtain relevant information of the object, such as an object distance, an azimuth, a height, a speed, an attitude, a shape and other parameters. In the field of autonomous driving, a vehicle LiDAR is configured to detect a pedestrian, a vehicle, other obstacles, etc. The volume of the vehicle LiDAR is becoming smaller and smaller. The problem of heat dissipation and electromagnetic interference of the vehicle LiDAR is increasingly prominent. When heat generated by a component in the LiDAR is accumulated, the temperature of a local part of the component increases, which affects the measurement performance of the LiDAR. Similarly, the increasingly serious electromagnetic interference among various components of the LiDAR causes waveform distortion on the components, which also affects the measurement performance of the LiDAR. How to improve the heat dissipation performance and anti-interference ability of the LiDAR is a problem that needs to be solved urgently.

US 2019/391239 A1 discloses a distance measuring apparatus having a housing made of a first material that is non-transmissive of electromagnetic waves. The housing includes an inner chamber, and a window portion made of a second material that is transmissive of electromagnetic waves and reflection waves. The housing further includes a partitioning wall made of a third material that is non-transmissive of electromagnetic waves. The partitioning wall is configured to partition the inner chamber of the housing into a first container chamber and a second container chamber. The first container chamber has a transceiver installed therein and communicates with the window portion. A processing unit is installed in the second container chamber.

CN 208 314 210 U discloses a Lidar system including: a light source for emitting a laser beam, an optical transmission module for transmitting the laser beam following an optical path transmission, and scanning module for reflecting the laser beam into the space. The scanning module includes a galvanometer scanner and a drive module for driving the galvanometer scanner to rotate or swing horizontally or vertically.

US 2019/146648 A1 discloses a Lidar device including a light detection module, an optical window, a shield plate, and a heater. The heater is provided to heat an optical window in order to remove raindrops, snow, dirt, and the like attached to the optical window.

### SUMMARY

An embodiment of the present invention provides a LiDAR, which solves the problems of poor heat dissipation performance and large internal interference of the LiDAR in the related art. The invention is set out in the appended set of claims.

In order to solve the above technical problems, the embodiments of the present invention disclose the following technical solutions:
In a first aspect, the present invention provides a LiDAR, comprising: a housing, and an analog plate, a digital plate, an emitting plate, a receiving plate, a galvanometer, and an interface plate that are arranged in the housing, and the plates are all arranged as separate plates, and
Wherein the emitting plate is configured to emit an emergent laser;
Wherein the receiving plate is configured to receive a reflected laser formed by the emergent laser reflected by a target object, and to convert the reflected laser into first electrical signals;
Wherein the galvanometer is configured to directionally deflect the emergent laser and the reflected laser;
wherein the analog plate is configured to control the deflection angle of the galvanometer, and to condition the first electrical signals into second electrical signals;
wherein the digital plate is configured to take sample of the second electrical signals to obtain sampled signals, and to generate a scanned image based on the sampled signals; and wherein a main controller, a sampling circuit, and a first power supply circuit on the digital plate are attached to a top surface of the housing; and
wherein the interface plate comprises a communication interface and a power interface; and wherein the communication interface is configured to communicate with an external apparatus and the power interface is configured to receive external voltage signals.

In one possible design, the LiDAR also comprises:
a window heating sheet, connected to the interface plate, and configured to convert electrical energy from the interface plate into heat energy.

In a possible design, the interface plate further comprises:
a heating circuit, a bus voltage-stabilizing circuit, a power protection circuit, and an interface protection circuit;
wherein the power protection circuit is configured to perform overvoltage protection and overcurrent protection on the interface plate;
wherein the bus voltage-stabilizing circuit is configured to perform voltage stabilization processing on external voltage signals to obtain bus voltage signals;
wherein the heating circuit is configured to use the bus voltage signals to transmit electrical energy to the window heating sheet; and
wherein the interface protection circuit is configured to suppress interference of the communication interface.

In one possible design, the interface plate further comprises a first heat dissipation component, and wherein the bus voltage-stabilizing circuit is attached to the inner wall of the housing via the first heat dissipation component.

In a possible design, the window heating sheet is connected to the interface plate via a socket.

In a possible design, the digital plate comprises:
a main controller, a storage device, a watchdog circuit, a clock circuit, a sampling circuit, and a first power supply circuit;
wherein the storage device is configured to store a computer program;
wherein the watchdog circuit is configured to reset the main controller when the main controller fails;
wherein the clock circuit is configured to generate clock signals;
wherein the sampling circuit is configured to take sample of the second electrical signals according to the clock signals to obtain the sampled signals;
wherein the main controller is configured to call the computer program to process the sampling signals to obtain the scanned image; and
wherein the first power supply circuit is configured to convert the bus voltage signals into a plurality of working voltage signals with different voltage values, and provides the plurality of working voltage signals to each circuit in the digital plate.

In a possible design, the digital plate comprises an analog signal region and a digital signal region; wherein
the clock circuit, the sampling circuit, and the first power supply circuit are positioned in the analog signal region, and the main controller, the memory, and the watchdog circuit are positioned in the digital signal region.

In a possible design, the digital plate further comprises a second heat dissipation component; wherein
the main controller, the sampling circuit and the first power supply circuit are attached to an inner wall of the housing via the second heat dissipation component.

In a possible design, the analog plate comprises an emitting power supply circuit, an echo conditioning circuit, a receiving power supply circuit, a galvanometer drive circuit, a second power supply circuit, and a control unit;
wherein the second power supply circuit is configured to convert the bus voltage signals into first voltage signals and second voltage signals;
wherein the emitting power supply circuit is configured to use the first voltage signals to supply power to the emitting plate;
wherein the receiving power supply circuit is configured to use the second voltage signals to supply power to the receiving plate;
wherein the echo conditioning circuit is configured to receive the first electrical signals from the receiving plate, and condition the first electrical signals to obtain the second electrical signals;
wherein the control unit is configured to generate galvanometer drive signals, and send the galvanometer drive signals to the galvanometer drive circuit; and
wherein the galvanometer drive circuit is configured to adjust the deflection angle of the galvanometer according to the galvanometer drive signals.

In a possible design, the analog plate comprises a digital signal region and an analog signal region; wherein
the control unit is positioned in the digital signal region, and the emitting power supply circuit, the echo conditioning circuit, the receiving power supply circuit, the galvanometer drive circuit, and the second power supply circuit are positioned in the analog signal region.

In a possible design, the digital plate further comprises a third heat dissipation component;
wherein a printed circuit board of the emitting plate is attached to the inner wall of the housing via the third heat dissipation component;
wherein the emitting plate is connected to the analog plate via a flexible flat cable; and
wherein the material of a printed circuit board of the emitting plate is ceramics.

In a possible design, a first shielding cover is provided at the emitting plate and configured to electromagnetically shield the emitting plate.

In a possible design, a second shielding cover is provided at the receiving plate to electromagnetically shield the receiving plate. The receiving plate further comprises a signal amplifier. The signal amplifier is configured to amplify the first electrical signals.

In a possible design, the analog plate and the digital plate are stacked.

In this embodiment, the LiDAR comprises the housing, the analog plate, the digital plate, the emitting plate, the receiving plate, the interface plate, and the galvanometer. The analog plate, the digital plate, the emitting plate, and the receiving plate are arranged inside the housing. The various functions of the LiDAR are realized via a plurality of boards, so as to avoid the problems of poor heat dissipation and damage to components caused by implementing of all functions of the LiDAR in the related art by one plate card. An embodiment of the present invention implements a control function, a processing function, an emitting function, a receiving function, and an interface function of the LiDAR via each independent board, to prevent the components from generating a heat accumulation effect. In addition, according to the present invention, the digital plate for digital signal processing and the analog plate for analog signal processing are separately arranged to reduce electromagnetic interference between analog signals and digital signals, thereby further reducing the internal interference of the LiDAR.

### BRIEF DESCRIPTION OF THE DIAGRAMS

In order to explain embodiments of the present invention or the technical solutions in the prior art more clearly, the following briefly introduces the drawings that need to be used in the embodiments. Obviously, the drawings in the following description are only some of embodiments of the present invention. The person skilled in the art may obtain other drawings based on these drawings without creative work.
FIG. 1A shows a framework schematic diagram of a LiDAR according to an embodiment of the present invention;
FIG. 1B shows a schematic structural diagram of a LiDAR according to an embodiment of the present invention;
FIG. 1C shows a schematic diagram of the positions of various boards according to an embodiment of the present invention;
FIG. 1D shows an assembly schematic diagram according to an embodiment of the present invention;
FIG. 2 shows a schematic structural diagram of an interface plate in a LiDAR according to an embodiment of the present invention;
FIG. 3 shows a schematic structural diagram of a digital plate in a LiDAR according to an embodiment of the present invention;
FIG. 4 shows a schematic structural diagram of an analog plate in a LiDAR according to an embodiment of the invention;
FIG. 5 shows another schematic structural diagram of a LiDAR according to an embodiment of the present invention.

### DESCRIPTION OF THE INVENTION

The following embodiments of the present invention provide a LiDAR. Functions of the LiDAR are realized by a plurality of independent boards to reduce accumulation of heat generated by components in the LiDAR, which causes the failure of the components. In addition, the digital signal and the analog signal are processed via different boards, thereby reducing the internal interference of the LiDAR. Therefore, an embodiment of the present invention may improve heat dissipation performance and anti-interference ability of the LiDAR, and increase the reliability of the LiDAR.

The following clearly and completely describes the technical solutions in the embodiments of the present invention in conjunction with the drawings in the embodiments of the present invention.

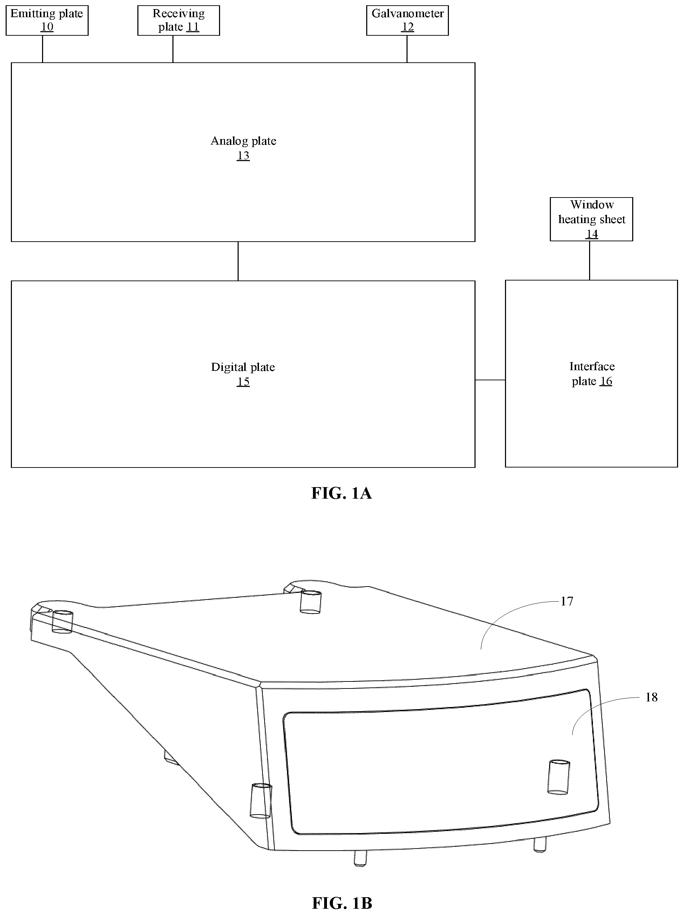

FIG. 1A-FIG. 1D show schematic diagrams of the LiDAR according to an embodiment of the present invention. The LiDAR comprises a housing 17, an emitting plate 10, a receiving plate 11, a galvanometer 12, an analog plate 13, a window heating sheet 14, a digital plate 15 and an interface plate 16. The interface plate 16 is provided with a power interface 164 and a communication interface 165.

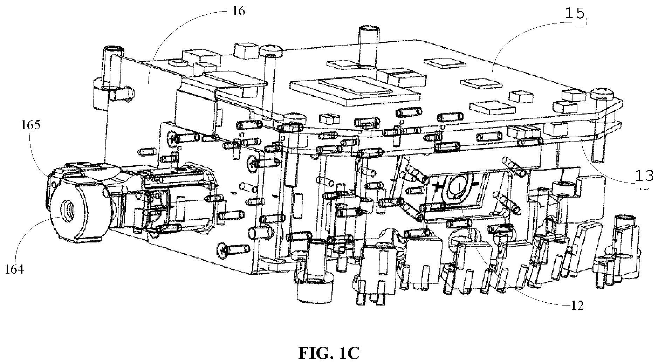

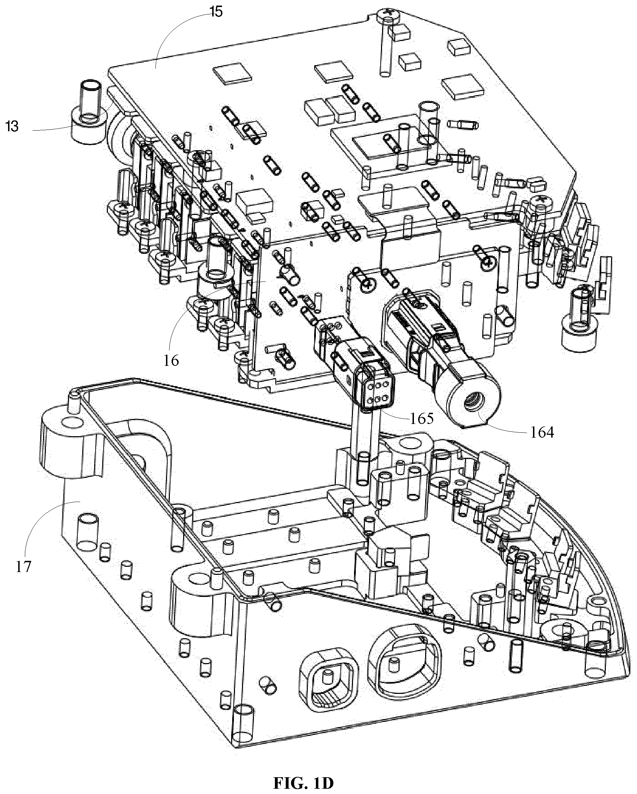

The emitting plate 10, the galvanometer 12, the receiving plate 11, the analog plate 13, the digital plate 15, and the interface plate 16 are arranged in the housing 17. The emitting plate 10, the receiving plate 11, the analog plate 13, and the digital plate 15 are separate plate cards. The plate card consists of a printed circuit board and a plurality of components arranged on the printed circuit board. The connection between the emitting plate 10 and the analog plate 13 is an electrical connection. For example, the emitting plate 10 and the analog plate 13 are electrically connected via a flexible flat cable or a socket. The connection between the receiving plate 11 and the analog plate 13 is an electrical connection. For example, the receiving plate 11 and the analog plate 13 are connected via the flexible flat cable. The connection between the galvanometer 12 and the analog plate 13 is electrical connection. For example, the galvanometer 12 and the analog plate 13 are electrically connected via the flexible flat cable or the socket. The connection between the analog plate 13 and the digital plate 15 is electrical connection. For example, the analog plate 13 and the digital plate 15 are electrically connected via a socket. The connection between the digital plate 15 and the interface plate 16 is an electrical connection. For example, the digital plate 15 and the interface plate 16 are electrically connected via a socket. The connection between the interface plate 16 and the window heating sheet 14 is electrical connection. For example, the interface plate 16 and the window heating sheet 14 are electrically connected via a socket. As shown in FIG. 1B, a window sheet 18 is arranged on the housing 17 of the LiDAR. The emergent laser generated by the LiDAR and the reflected laser received by the LiDAR pass through the window sheet 18. The window sheet 18 is made of a material with high light transmittance. According to the invention as claimed, the analog plate 13 and the digital plate 15 are stacked to reduce the volume of the LiDAR. As shown in FIG. 1C and FIG. 1D, the analog plate 13 is positioned under the digital plate 15. The digital plate is a core digital part that realizes the LiDAR functions. Compared with the analog plate, the components on the digital plate have higher power consumption and requires higher heat dissipation. The digital plate is arranged above the analog plate so that the digital plate is closer to the housing 17, which may better to conducting heat on the digital plate to the outside via the housing 17, thereby improving overall heat dissipation efficiency.

The working principle of the LiDAR in the embodiments of the present invention is described in detail below:
The emitting plate 10 is configured to emit the emergent laser. The number of the emitting plate 10 may be one or more. The emitting plate 10 may emit the emergent laser according to a preset laser frequency and a preset emitting period. The frequency and the period of the emergent laser may be determined according to actual needs, which is not limited to the embodiments of the present invention. The emergent laser beam is deflected by the galvanometer 12 and irradiates on a target object. For example, the emitting plate 10 is provided with a laser device, an emitting terminal collimating unit, a central circular hole emitting lens, and a receiver. The laser device is configured to generate the emergent laser. The emitting terminal collimating unit is configured to collimate the emergent laser emitted by the laser device. The central circular hole reflecting mirror comprises a central circular hole and an edge mirror and is configured to allow the collimated emergent laser to penetrate out of the central circular hole and irradiate the galvanometer 12.

The receiving plate 11 is configured to receive the reflected laser formed by the emergent laser reflected by the target object, and to convert the reflected laser into first electrical signals. The emergent laser irradiates the target object to form the reflected laser. The receiving plate 11 receives the emergent laser via a receiving mirror. The receiving mirror focuses the emergent laser and transmits the emergent laser to a photoelectric converter. The photoelectric converter converts the reflected laser into the first electrical signals. For example, the photoelectric converter on the receiving plate 11 may comprise any one of APD (Avalanche Photodiode), PIN (Positive Intrinsic-Negative), APD in Geiger mode, and a single photon receiver, as well as a silicon photomultiplier such as avalanche photodiode APD, MPPC (Multi Pixel Photon Counters), and SiPM, or may consist of a single array or a plurality of arrays of the forgoing functional devices.

The galvanometer 12 is configured to directionally deflect the emergent laser emitted by the emitting plate 10. The analog plate 13 sends out galvanometer drive signals to the galvanometer 12 to control the deflection angle of the galvanometer 12, thereby directionally deflecting the emergent laser. For example, the analog plate 13 controls the galvanometer 12 to scan in horizontal and vertical directions in a sinusoidal manner. The galvanometer 12 may be a one-dimensional galvanometer or a two-dimensional galvanometer. For example, the galvanometer 12 may be a MEMS (Micro-Electro-Mechanical System) galvanometer, or other mechanical or electronic galvanometer.

The analog plate 13 is configured to control the deflection angle of the galvanometer 12. The deflection angle of the galvanometer 12 is configured to control the deflection direction of the emergent laser. The analog plate 13 sends the galvanometer drive signals to the galvanometer 12. The galvanometer drive signals may be a sine wave signal. The frequency and amplitude of the sine wave may be determined according to actual needs. In addition, the analog plate 13 also collects the feedback signals of the galvanometer 12 (for example: a horizontal deflection angle and a vertical deflection angle, etc.), and realizes a closed-loop control of the galvanometer 12 according to the feedback signals. For example: the frequency of the sine wave signals is equal to or approximately equal to the resonance frequency of the galvanometer 12. The galvanometer drive signals control the galvanometer 12 to scan using a corresponding scanning mode. The scanning mode may be any one of a sine wave mode, a cosine wave mode or a triangle wave mode. The analog plate 13 is also configured to condition the first electrical signals generated by the receiving plate 11 to obtain the second electrical signals. The conditioning process includes but is not limited to one or more of debouncing, filtering, protection, level conversion, and isolation.

The digital plate 15 is configured to sample the second electrical signals to obtain the sampled signals, and to generate a scanned image according to the sampled signals. The scanned image comprises a plurality of point clouds. The positions of the point clouds are related to the deflection angle of the galvanometer 12 in horizontal and vertical directions. The detection distance is related to the intensity of the reflected laser.

The interface plate 16 comprises a communication interface and a power interface. The communication interface is configured to communicate with an external apparatus. The communication interface includes but is not limited to a RS232 interface, a USB interface, or a CAN interface. The power interface is configured to receive external voltage signals. The LiDAR uses the external voltage signals to supply power to each board.

The window heating sheet 14 is connected to the interface plate 16. The window heating sheet is configured to convert electrical energy from the interface plate 16 into thermal energy. The window heating sheet 14 consists of a high-resistance material to improve the efficiency of converting electrical energy into thermal energy. The window heating sheet 14 is tightly attached to the window sheet 18 in FIG. 1B to defrost the window sheet 18 in FIG. 1B, thereby preventing the water vapor of the window sheet 18 from affecting the intensity and direction of the emergent laser and the emitting laser. The connection between the window heating sheet 14 and the interface plate 16 is an electrical connection. For example, the window heating sheet 14 and the interface plate 16 are electrically connected via a socket.

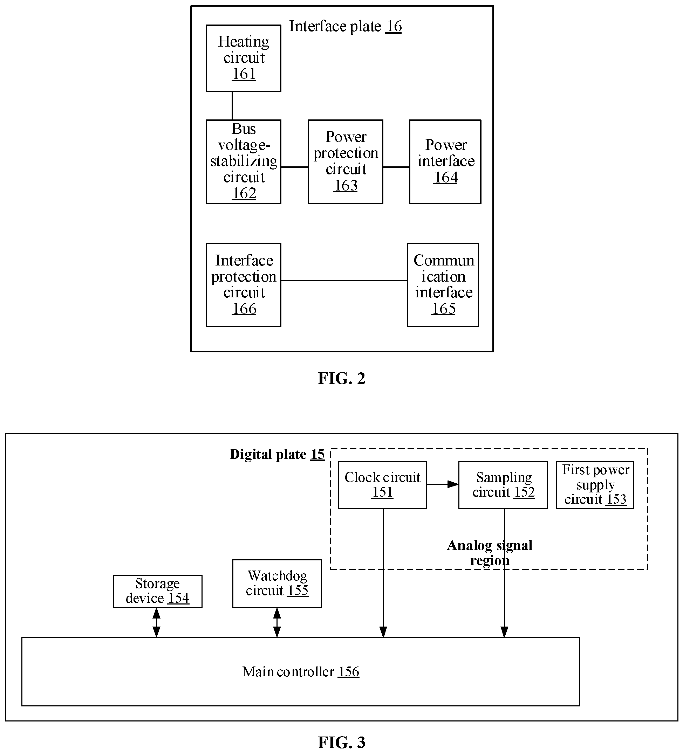

In a possible implementation, as shown in FIG. 1C, FIG. 1D and FIG. 2, the interface plate 16 comprises a heating circuit 161, a bus voltage-stabilizing circuit 162, a power protection circuit 163, a power interface 164, a communication interface 165, and an interface protection circuit 166. The power interface 164 is configured to receive external voltage signals. For example, the external voltage signals are 5V DC voltage signals. The power protection circuit 163 is configured to perform overvoltage protection and overcurrent protection for the interface plate, thereby preventing excessive transient voltage or current from causing damage to the components of the LiDAR. In addition, the power protection circuit 163 is also configured to filter out interference of an external power supply to the LiDAR, and the interference of the LiDAR to the external power supply. The bus voltage-stabilizing circuit 162 is configured to stabilize the external voltage signals to obtain the bus voltage signals, and to stabilize those external voltage signals with voltage fluctuations to obtain target voltage signals with a constant voltage value, thereby ensuring the stability of a post-stage power supply. The heating circuit 161 is electrically connected to the window heating sheet 14. The heating circuit 161 uses bus voltage signals to transmit electric energy to the window heating sheet 14. The bus voltage signals are loaded on the window heating sheet 14. The window heating sheet 14 converts electrical energy into thermal energy and transfers the thermal energy to a lens of the galvanometer 12 and a receiving lens of the receiving plate 11 to defrost the lens. The communication interface 165 is configured to communicate with the external apparatus. The LiDAR receives instructions or data sent by the external apparatus via the communication interface 165, or the LiDAR sends instructions or data to the external apparatus via the communication interface 165. The interface protection circuit 166 is configured to protect the communication interface 165, such as overvoltage protection, overcurrent protection, interference suppression, etc., to improve the reliability of communication. It may be understood that the bus voltage-stabilizing circuit 163 in the interface plate 16 is a main heat source.

Further, the interface plate 16 further comprises a first heat dissipation component. The first heat dissipation component may be made of a material with high thermal conductivity. For example, the material of the first heat dissipation component is aluminum, ceramics, or the like. Since the bus voltage-stabilizing circuit 163 in the interface plate is the main heat source, the bus voltage-stabilizing circuit 163 is attached to the inner wall of the housing via the first heat dissipation component. Heat generated by the bus voltage-stabilizing circuit 163 is quickly transferred to the housing, thereby improving the heat dissipation efficiency of the voltage-stabilizing circuit 163.

In a possible implementation, as shown in FIG. 3, the digital plate 15 comprises a clock circuit 151, a sampling circuit 152, a first power supply circuit 153, a storage device 154, a watchdog circuit 155 and a main controller 156. The storage device is configured to store a computer program. The watchdog circuit 155 also refers to a watchdog timer and is a timer circuit. The watchdog circuit 155 is configured to reset the main controller 156 when the main controller 156 fails. The main controller periodically sends pulse signals to the watchdog circuit 155, namely, kicking the dog/service the dog. When the main controller 156 fails (for example, executes an infinite loop), the main controller 156 cannot send pulse signals to the watchdog circuit 155. When the watchdog circuit 155 does not receive the pulse signals within a preset time period, the watchdog circuit 155 sends reset signals to the main controller 156 to instruct the main controller 156 to perform a reset operation. The clock circuit 151 is configured to: generate clock signals, provide a working clock for the main controller 156, and provide a sampling clock for the sampling circuit 152. The sampling circuit 152 samples the first electrical signals from the analog plate 13 according to a preset sampling frequency to obtain the sampled signals. The main controller 156 calls the computer program stored in the storage device 154 to process the sampled signals to obtain the scanned image. The main controller 156 may be a central processing unit (CPU), a network processor (NP) or a combination of a CPU and NP. The processor may further comprise a hardware chip. The forgoing hardware chip may be an application-specific integrated circuit (ASIC), a programmable logic device (PLD), or a combination thereof. The forgoing PLD may be a complex programmable logic device (CPLD), a field-programmable gate array (FPGA), a generic array logic (GAL) or any combination thereof. The main controller 156 is also connected to the communication interface 165 in the interface plate 16, and the main controller 156 communicates with the external apparatus via the communication interface 165. The main controller 156 is also configured to send control signals to the control unit in the analog plate 13 to control the emitting plate 10 to emit the emergent laser, and to control the receiving plate 11 to receive the reflected laser. The first power supply circuit 153 is configured to convert the bus voltage signals into a plurality of working voltage signals of different voltage values, and to supply power to each circuit in the digital plate 15. It may be understood that the heat source of the digital plate 15 is mainly concentrated on the main controller 156, the sampling circuit 152, and the first power supply circuit 153.

Further, the digital plate 15 is divided into an analog signal region and a digital signal region. The clock circuit 151, the sampling circuit 152, and the first power supply circuit 153 are positioned in the analog signal region. The storage device 154, the watchdog circuit 155 and the main controller 156 are positioned in the digital signal region. The embodiment of the present invention isolates the digital signals and the analog signals on the digital plate 15 to reduce interference between the digital signals and the analog signals.

Further, the digital plate 15 further comprises a second heat dissipation component. The second heat dissipation component is made of high thermal conductivity material. For example, the second heat dissipation component is a compressible soft gasket. The second heat dissipation component is filled between the main heat sources in the housing and the digital plate 15. The main controller 156, the sampling circuit 152, and the first power supply circuit 153 are tightly attached to the inner wall of the housing via the second heat dissipation component. As the main controller 156, the sampling circuit 152, and the first power supply circuit 153 are the main heat sources of the digital plate 15, the above three components transfer generated heat to the housing via the second heat dissipation component, thereby improving the heat dissipation efficiency of the digital plate 15.

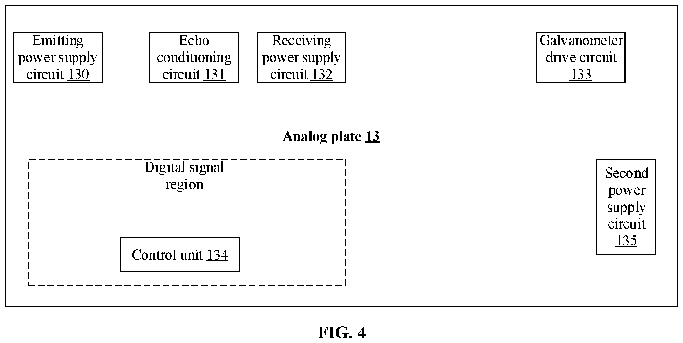

In a possible implementation, as shown in FIG. 4, the analog plate 13 comprises an emitting power supply circuit 130, an echo conditioning circuit 131, a receiving power supply circuit 132, a galvanometer drive circuit 133, a control unit 134, and a second power supply circuit 135. The second power supply circuit 135 is configured to convert the bus voltage signals into a plurality of voltage signals of different voltage values. The plurality of voltage signals comprise a first voltage signal and a second voltage signal. The first voltage signal and the second voltage signal have different voltage values. The emitting power supply circuit 130 is configured to use the first voltage signals to supply power to the emitting plate 10. The receiving power supply circuit 132 is configured to use the second voltage signals to supply power to the receiving plate 11. The echo conditioning circuit 131 is configured to condition the first electrical signals from the receiving plate 11 to obtain the second electrical signals, and the conditioning process comprises one or more of debouncing, filtering, protection, level conversion, and isolation. The control unit 134 is configured to generate the galvanometer drive signals and send the galvanometer drive signals to the galvanometer drive circuit, thereby controlling the galvanometer 12 to scan using the corresponding scanning mode. The control unit 134 may control the emitting plate 10 to emit the emergent laser and control the receiving plate 11 to receive the reflected laser according to the instructions of the main controller. The galvanometer drive circuit 133 is configured to adjust the deflection angle of the galvanometer according to the galvanometer drive signals. The galvanometer drive signals may be the superposition of a triangle wave signal and a sine wave signal to control the galvanometer to scan in the horizontal and vertical directions.

Further, the analog plate 13 is divided into a digital signal region and an analog signal region. The control unit 134 is positioned in the digital signal region, the emitting power supply circuit 130, the echo conditioning circuit 131, the receiving power supply circuit 132, the galvanometer drive circuit 133, and the second power supply circuit are located in the analog signal region. By isolating the digital signals from the analog signals on the analog plate 13, the interference between the digital signals and the analog signals is reduced.

In a possible implementation, the LiDAR further comprises a third heat dissipation component. The third heat dissipation component is made of a high thermal conductivity material. The printed circuit board of the emitting plate 10 is attached to the inner wall of the housing via the third heat dissipation component to transfer the heat generated by the emitting plate 10 to the housing, thereby improving the heat dissipation efficiency of the emitting plate 10. The emitting plate 10 may be connected to the analog plate 13 via a flexible flat cable, and the material of the printed circuit board of the emitting plate 10 is ceramics.

In a possible implementation, a first shielding cover is provided on the emitting plate 10. The material of the first shielding cover is metal. The first shielding cover covers the components of the emitting plate 10 and is configured to shield the electromagnetic signals of the emitting plate 10, thereby preventing the electromagnetic signal generated by the emitting plate 10 from causing interference to other components.

In a possible implementation, a second shielding cover is provided on the receiving plate 11. The material of the second shielding cover is metal. The second shielding cover covers the components of the receiving plate 11 and is configured to shield the electromagnetic signals of the receiving plate 11, thereby preventing the electromagnetic signal generated by the receiving plate 11 from causing interference to other components. In addition, the receiving plate 11 also comprises a signal amplifier for amplifying first signals, so as to further improve the anti-interference ability of the receiving plate 11.

In this embodiment, the LiDAR comprises the housing, the analog plate, the digital plate, the emitting plate, the receiving plate, the interface plate, and the galvanometer. The analog plate, the digital plate, the emitting plate, and the receiving plate are arranged inside the housing. The various functions of the LiDAR are realized via a plurality of boards, so as to avoid the problems of poor heat dissipation and damage to components caused by implementing all functions of the LiDAR in related art by one board. An embodiment of the present invention realizes a control function, a processing function, an emitting function, a receiving function, and an interface function of the LiDAR by each independent board, to prevent the components from generating a heat accumulation effect. In addition, according to the present invention, the digital plate for digital signal processing and the analog plate for analog signal processing are separately arranged to reduce electromagnetic interference between analog signals and digital signals, thereby further reducing the internal interference of the LiDAR.

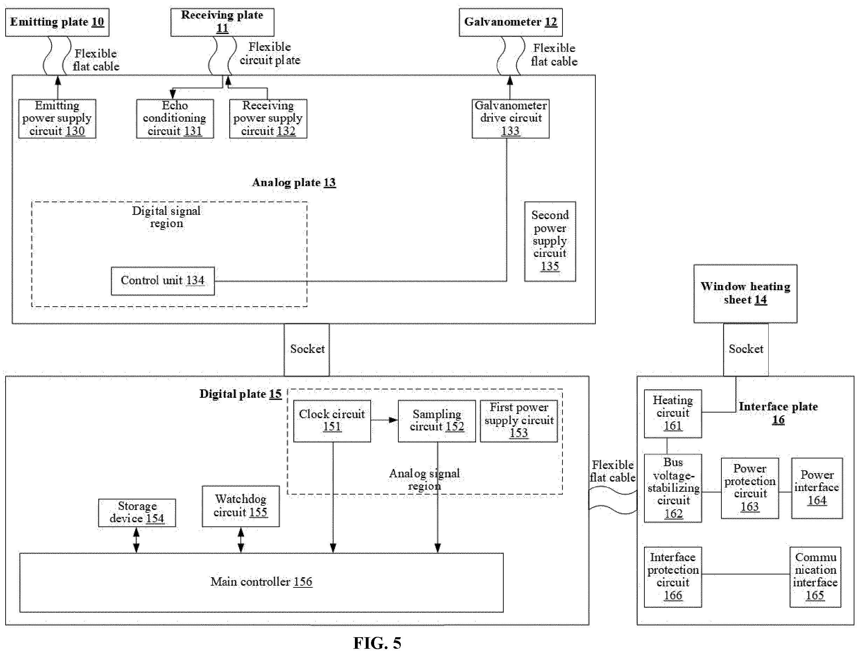

FIG. 5 is another schematic structural diagram of a LiDAR provided by an embodiment of the present invention. In this embodiment of the application, the LiDAR comprises a housing (not shown in FIG. 5), an emitting plate 10, a receiving plate 11, a galvanometer 12, an analog plate 13, a window heating plate 14, a digital plate 15, and an interface plate 16. The analog plate 13 comprises an emitting power supply circuit 130, an echo conditioning circuit 131, a receiving power supply circuit 132, a galvanometer drive circuit 133, a control unit 134, and a second power supply circuit 135. The digital plate 15 comprises a clock circuit 151, a sampling circuit 152, a first power supply circuit 153, a storage device 154, a watchdog circuit 155, and a main controller 156. The interface plate 16 comprises a heating circuit 161, a bus voltage-stabilizing circuit 162, a power protection circuit 163, a power interface 164, a communication interface 165, and an interface protection circuit 166. The analog plate 13 is divided into two independent digital signal regions and an analog signal region (not shown in FIG. 5). The control unit 134 is positioned in the digital signal region. The emitting power supply circuit 130, the echo conditioning circuit 131, the receiving power supply circuit 132, the galvanometer drive circuit 133, and the second power supply circuit 135 are positioned in the analog signal region. The digital plate 15 is also divided into two independent digital signal regions (not shown in FIG. 5) and an analog signal region. The clock circuit 151, the sampling circuit 152, and the first power supply circuit 153 are positioned in the analog signal region. The storage device 154, the watchdog circuit 155, and the main controller 156 are positioned in the digital signal region. The interface plate 16 also comprises a first heat dissipation component (not shown in FIG. 5). The first heat dissipation component may be made of a material with high thermal conductivity. Since the bus voltage-stabilizing circuit 163 in the interface plate is the main heat source, the bus voltage-stabilizing circuit 163 is attached to the inner wall of the housing via the first heat dissipation component. Heat generated by the bus voltage-stabilizing circuit 163 is quickly transferred to the housing, thereby improving the heat dissipation efficiency of the voltage-stabilizing circuit 163. The digital plate 15 further comprises a second heat dissipation component (not shown in FIG. 5). The second heat dissipation component may be made of high thermal conductivity material. For example, the second heat dissipation component is made of aluminum or ceramics. The main controller 156, the sampling circuit 152, and the first power supply circuit 153 are tightly attached to the inner wall of the housing via the second heat dissipation component. As the main controller 156, the sampling circuit 152, and the first power supply circuit 153 are the main heat sources of the digital plate 15, the above three components transfer generated heat to the housing via the second heat dissipation component, thereby improving the heat dissipation efficiency of the digital plate 15. The printed circuit board of the emitting plate 10 is attached to the inner wall of the housing via a third heat dissipation component to transfer the heat generated by the emitting plate 10 to the housing, thereby improving the heat dissipation efficiency of the emitting plate 10. The emitting plate 10 may be connected to the analog plate 13 via a flexible flat cable, and the material of the printed circuit board of the emitting plate 10 is ceramics. A first shielding cover is provided on the emitting plate 10. The material of the first shielding cover is metal. The first shielding cover covers the components of the emitting plate 10 and is configured to shield the electromagnetic signals of the emitting plate 10, thereby preventing the electromagnetic signal generated by the emitting plate 10 from causing interference to other components. A second shielding cover is provided on the receiving plate 11. The material of the second shielding cover is metal. The second shielding cover covers the components of the receiving plate 11 and is configured to shield the electromagnetic signals of the receiving plate 11, thereby preventing the electromagnetic signal generated by the receiving plate 11 from causing interference to other components. In addition, the receiving plate 11 also comprises a signal amplifier for amplifying first signals, so as to further improve the anti-interference ability of the receiving plate 11.

The connection relationship of the various components in FIG. 5 is as follows: the emitting plate 10 is connected to the emitting power supply circuit 130 of in the analog plate 13 via a flexible flat cable. The receiving plate 11 is connected to the echo conditioning circuit 131 and the receiving power supply circuit 132 in the analog plate 13 via a flexible circuit plate. The galvanometer 12 is connected to the galvanometer drive circuit 133 in the analog plate 13 via the flexible flat cable. The control unit 134 is connected to the galvanometer drive circuit 133. The second power supply circuit 135 is connected to the emitting power supply circuit 130, the echo conditioning circuit 131, the receiving power supply circuit 132, the galvanometer drive circuit 133 and the control unit 134 in the analog plate 13 (not shown in FIG. 5). The analog plate 13 and the digital plate 15 are electrically connected via a socket. The main controller 156 is connected to the control unit 134 in the analog plate 13 (not shown in FIG. 5) via a socket. The storage device 154 is connected to the main controller 156. The watchdog circuit 155 is connected to the main controller 156. The clock circuit 151 is connected to the main controller 156 and the sampling circuit 152. The first power supply circuit 153 is connected to the clock circuit 151, the sampling circuit 152, the storage device 154, the watchdog circuit 155, and the main controller 156 (not shown in FIG. 5). The digital plate 15 is connected to the interface plate 16 via a flexible flat cable. The window heating sheet 14 is connected to the heating circuit 161 of the interface plate 16 via a socket. The heating circuit 161 is connected to the bus voltage-stabilizing circuit 162. The bus voltage-stabilizing circuit 162 is connected to the power protection circuit 163. The power protection circuit 163 is connected to the power interface 164. The receiving protection circuit 166 is connected to the communication interface 165.

The workflow of each component in FIG. 5 comprises:
The power interface 164 is configured to input external voltage signals. The power protection circuit 163 is configured to perform overvoltage protection and overcurrent protection for the interface plate 16. The bus voltage-stabilizing circuit 162 is configured to stabilize the external voltage signals to obtain bus voltage signals. The heating circuit 161 is configured to heat the window heating sheet 14 using the bus voltage signals. The communication interface 165 is an interface for data transmission between the main controller 156 and an external apparatus. The interface protection circuit 166 is configured to suppress interference of the communication interface 165.

The emitting plate 10 is configured to emit the emergent laser. The receiving plate 11 is configured to receive the reflected laser formed by the emergent laser passing through a target object, and to convert the reflected laser into first electrical signals. The galvanometer 12 is configured to deflect the emergent laser directionally. The second power supply circuit 135 is configured to convert the bus voltage signals into first voltage signals and second voltage signals. The emitting power supply circuit 130 is configured to use the first voltage signals to supply power to the emitting plate 10. The receiving power supply circuit 132 is configured to use the second voltage signals to supply power to the receiving plate 11. The echo conditioning circuit 131 is configured to receive the first electrical signals from the receiving plate 11, and to condition the first electrical signals to obtain the second electrical signals. The control unit 134 is configured to generate galvanometer drive signals, and to send the galvanometer drive signals to the galvanometer drive circuit 133. The galvanometer drive circuit 133 is configured to adjust the deflection angle of the galvanometer 12 according to the galvanometer drive signals.

The storage device 154 is configured to store computer program. The watchdog circuit 155 is configured to reset the main controller when the main controller fails. The clock circuit 151 is configured to generate clock signals. The sampling circuit 152 is configured to sample the second electrical signals to obtain sampled signals. The main controller 156 is configured to call the computer program to process the sampled signals to obtain a scanned image. The first power supply circuit 153 is configured to convert the bus voltage signals into a plurality of working voltage signals of different voltage values. The plurality of working voltage signals are provided to each circuit in the digital plate.

For the specific implementation process of each circuit in FIG. 5, please refer to the description in FIG. 2 to FIG. 4, which will not be repeated here.

The embodiment of the present invention may optimize heat dissipation, that is, improve the heat dissipation efficiency of the LiDAR, and achieve electromagnetic interference optimization, that is, improve the anti-interference ability of the LiDAR.

Regarding heat dissipation optimization, the main heat sources of the LiDAR are distributed on the interface plate, the digital plate, and the emitting plate. The bus voltage-stabilizing circuit of the interface plate is tightly attached to the side of a housing of the LiDAR. Heat of the circuit is conducted to the housing via the heat dissipation component, thereby improving heat dissipation efficiency. The main controller, a collecting circuit, and a power supply circuit on the digital plate are tightly attached to the top surface of the housing of the LiDAR. The heat of the circuit is conducted to the housing via a heat dissipation gasket, thereby improving the heat dissipation efficiency. The material of the emitting plate is a ceramic plate with high thermal conductivity. The emitting plate is attached to the bottom of the LiDAR via a heat dissipation component to conduct heat to the housing, thereby improving the heat dissipation efficiency. On the whole, the main heat source on each plate in the entire LiDAR is close to the housing to facilitate heat dissipation, thereby reducing the internal temperature rise of a complete machine.

For the optimization of electromagnetic interference, on an external interface, only the interface plate of the entire LiDAR is connected to the outside. The interference isolation is achieved on the interface. On the one hand, the interference isolation resists the interference of external interference signals on the inner part of the LiDAR, and on the other hand, the interference isolation suppresses interference of internal interference signals of the LiDAR on the external interface, thereby achieving a good electromagnetic compatibility design. In the internal circuit design of the LiDAR, the analog plate and the digital plate are strictly divided into the analog signal region and the digital signal region. The digital signal region and the analog signal region are spatially isolated and prevented, thereby reducing the interference between the analog signal and the digital signal, ensuring the reliability of analog signal quality and the digital signal quality, and guaranteeing the overall anti-interference ability of the LiDAR.

In addition, in the embodiment of the present invention, the emitting plate and the receiving plate are designed as independent boards. Very strong electromagnetic radiation interference is provided inside the emitting plate. After being designed as the independent boards, a shielding cover is added to shield the electromagnetic radiation interference. On the one hand, the shielding cover reduces the interference of the emitting plate to other internal circuit parts of the LiDAR, and on the other hand, the shielding cover reduces the overall external radiation interference of the complete machine. A receiving sensor on the receiving plate outputs weak signals, which is very susceptible to external interference. After being designed as the independent boards, the shielding cover is added to shield the board, thereby reducing electromagnetic radiation interference of other circuits inside the LiDAR or outside the LiDAR. In addition, the signal amplification circuit is designed inside the receiving plate. Amplified signals have stronger anti-interference ability, thereby ensuring the quality of echo signals, and ensuring the performance of the LiDAR in various electromagnetic interference environments.

The person skilled in the art may clearly understand that the technology in the embodiments of the present invention may be implemented by software plus necessary general-purpose hardware. The general-purpose hardware comprises a general-purpose integrated circuit, a general-purpose CPU, a general-purpose memory, a general-purpose device, etc. Of course, the technology in the embodiments of the present invention may be implemented by dedicated hardware comprising a dedicated integrated circuit, a dedicated CPU, a dedicated memory, a dedicated component, etc., but in many cases, the general-purpose hardware is a better implementation. Based on this understanding, the technical solutions in the embodiments of the present invention may be essentially embodied in the form of a software product or the part that contributes to the prior art may be embodied in the form of the software product. The software product may be stored in a storage medium, such as a read-only memory (ROM), a random access memory (RAM), a magnetic disk, an optical disks, etc., including a plurality of instructions to make a computer apparatus (which may be a personal computer, a server, or a network device) to perform a method described in each embodiment or some parts of the embodiment of the present invention.

The various embodiments in this specification are described in a progressive manner. The same or similar parts between the various embodiments may be referred to each other. Each embodiment focuses on the difference from other embodiments. In particular, as for a system embodiment, since the system embodiment is basically similar to a method embodiment, the description is relatively simple. For related parts, please refer to the part of the description of the method embodiment.

## Claims

1. A LiDAR, comprising: a housing (17), an analog plate (13), a digital plate (15), an emitting plate (10), a receiving plate (11), a galvanometer (12), and an interface plate (16), **characterized in that**:
the analog plate (13), the digital plate (15), the emitting plate (10), the receiving plate (11), and the interface plate (16) are arranged as separate plates;
the analog plate (13), the digital plate (15), the emitting plate (10), and the receiving plate (11) are arranged inside the housing (17);
the emitting plate (10) is configured to emit an emergent laser and is attached to a bottom of the housing (17);
the receiving plate (11) is configured to receive a reflected laser formed by the emergent laser reflected by a target object, and convert the reflected laser into first electrical signals;
the galvanometer (12) is configured to directionally deflect the emergent laser;
the analog plate (13) is configured to control a deflection angle of the galvanometer (12) and condition the first electrical signals into second electrical signals , and is positioned under the digital plate (15);
the digital plate (15) is configured to sample the second electrical signals to obtain sampling signals and generate a scanned image based on the sampling signals, wherein a main controller (156), a sampling circuit (152), and a first power supply circuit (153) on the digital plate (15) are attached to a top surface of the housing (17); and
the interface plate (16) comprises a communication interface (165) and a power interface (164), the communication interface (165) configured to communicate with an external apparatus, and the power interface (164) configured to receive external voltage signals, wherein a bus voltage-stabilizing circuit (162) of the interface plate (16) is attached to a side of the housing (17).

2. The LiDAR according to claim 1, wherein the interface plate (16) further comprises a heating circuit (161), the bus voltage-stabilizing circuit (162), a power protection circuit (163), and an interface protection circuit (166), wherein:
the power protection circuit (163) is configured to perform overvoltage protection and overcurrent protection on the interface plate (16);
the bus voltage-stabilizing circuit (162) is configured to stabilize the external voltage signals to obtain bus voltage signals;
the heating circuit (161) is configured to use the bus voltage signals to transmit electrical energy to a window heating sheet (14); and
the interface protection circuit (166) is configured to suppress interference of the communication interface (165).

3. The LiDAR according to claim 2, wherein the interface plate (16) further comprises a first heat dissipation component, and the bus voltage-stabilizing circuit (162) is attached to an inner wall of the housing (17) via the first heat dissipation component.

4. The LiDAR according to claim 2, wherein the digital plate comprises:
the main controller (156), a storage device (154), a watchdog circuit (155), a clock circuit (151), the sampling circuit (152), and the first power supply circuit (153), wherein:
the storage device (154) is configured to store a computer program;
the watchdog circuit (155) is configured to reset the main controller (156) when the main controller (156) fails;
the clock circuit (151) is configured to generate clock signals;
the sampling circuit (152) is configured to sample the second electrical signals according to the clock signals to obtain the sampling signals;
the main controller (156) is configured to call the computer program to process the sampling signals to obtain the scanned image; and
the first power supply circuit (153) is configured to convert the bus voltage signals into a plurality of working voltage signals with different voltage values, and provide the plurality of working voltage signals to each circuit in the digital plate (15).

5. The LiDAR according to claim 1, wherein the digital plate (15) comprises an analog signal region and a digital signal region;
a clock circuit (151), a sampling circuit (152), and a first power supply circuit (153) are positioned in the analog signal region, and a main controller (156), a memory, and a watchdog circuit (155) are positioned in the digital signal region.

6. The LiDAR according to claim 4 or 5, wherein the digital plate (15) further comprises a second heat dissipation component;
wherein the main controller (156), the sampling circuit (152) and the first power supply circuit (153) are attached to an inner wall of the housing (17) via the second heat dissipation component.

7. The LiDAR according to claim 2, wherein the analog plate (13) comprises an emitting power supply circuit (130), an echo conditioning circuit (131), a receiving power supply circuit (132), a galvanometer drive circuit (133), a second power supply circuit (135), and a control unit (134), wherein:
the second power supply circuit (135) is configured to convert the bus voltage signals into first voltage signals and second voltage signals;
the emitting power supply circuit (130) is configured to use the first voltage signals to supply power to the emitting plate (10);
the receiving power supply circuit (132) is configured to use the second voltage signals to supply power to the receiving plate (11);
the echo conditioning circuit (131) is configured to receive the first electrical signals from the receiving plate (11), and condition the first electrical signals to obtain the second electrical signals;
the control unit (134) is configured to generate galvanometer drive signals, and send the galvanometer drive signals to the galvanometer drive circuit (133); and
the galvanometer drive circuit (133) is configured to adjust the deflection angle of the galvanometer (12) according to the galvanometer drive signals.

8. The LiDAR according to claim 7, wherein the analog plate (13) comprises a digital signal region and an analog signal region;
wherein the control unit (134) is positioned in the digital signal region, the emitting power supply circuit (130), the echo conditioning circuit (131), the receiving power supply circuit (132), the galvanometer drive circuit (133), and the second power supply circuit (135) are positioned in the analog signal region.

9. The LiDAR according to claim 1, further comprising a third heat dissipation component, wherein:
a printed circuit board of the emitting plate (10) is attached to an inner wall of the housing (17) via the third heat dissipation component, the emitting plate (10) is connected to the analog plate (13) via a flexible flat cable, and a material of the printed circuit board of the emitting plate (10) is ceramics.

10. The LiDAR according to claim 1, wherein a first shielding cover is provided at the emitting plate (10) and configured to electromagnetically shield the emitting plate (10).

11. The LiDAR according to claim 1, wherein a second shielding cover is provided at the receiving plate (11) and configured to electromagnetically shield the receiving plate (11), and the receiving plate (11) further comprises a signal amplifier configured to amplify the first electrical signals.

## Patentansprüche

1. Ein LiDAR, umfassend: ein Gehäuse (17), eine analoge Platte (13), eine digitale Platte (15), eine emittierende Platte (10), eine empfangende Platte (11), ein Galvanometer (12) und eine Schnittstellenplatte (16), **dadurch gekennzeichnet, dass**:
die analoge Platte (13), die digitale Platte (15), die emittierende Platte (10), die empfangende Platte (11) und die Schnittstellenplatte (16) als separate Platten angeordnet sind;
die analoge Platte (13), die digitale Platte (15), die emittierende Platte (10) und die empfangende Platte (11) innerhalb des Gehäuses (17) angeordnet sind;
die emittierende Platte (10) so konfiguriert ist, dass sie einen austretenden Laser aussendet und an einer Unterseite des Gehäuses (17) angebracht ist;
die empfangende Platte (11) so konfiguriert ist, dass sie einen reflektierten Laser empfängt, der durch den austretenden Laser gebildet wird, der von einem Zielobjekt reflektiert wird, und den reflektierten Laser in erste elektrische Signale umwandelt;
das Galvanometer (12) so konfiguriert ist, dass es den austretenden Laser richtungsmäßig ablenkt;
die analoge Platte (13) ist so konfiguriert, dass sie einen Ablenkwinkel des Galvanometers (12) steuert und die ersten elektrischen Signale in zweite elektrische Signale umwandelt, und ist unter der digitalen Platte (15) positioniert;
die digitale Platte (15) ist so konfiguriert, dass sie die zweiten elektrischen Signale abtastet, um Abtastsignale zu erhalten und basierend auf den Abtastsignalen ein gescanntes Bild zu erzeugen, wobei ein Hauptcontroller (156), eine Abtastschaltung (152) und eine erste Stromversorgungsschaltung (153) auf der digitalen Platte (15) an einer oberen Oberfläche des Gehäuses (17) angebracht sind; und
die Schnittstellenplatte (16) umfasst eine Kommunikationsschnittstelle (165) und eine Stromschnittstelle (164), wobei die Kommunikationsschnittstelle (165) so konfiguriert ist, dass sie mit einem externen Gerät kommuniziert, und die Stromschnittstelle (164) so konfiguriert ist, dass sie externe Spannungssignale empfängt, wobei eine Busspannungsstabilisierungsschaltung (162) der Schnittstellenplatte (16) an einer Seite des Gehäuses (17) angebracht ist.

2. Das LiDAR gemäß Anspruch 1, wobei die Schnittstellenplatte (16) ferner eine Heizschaltung (161), die Busspannungsstabilisierungsschaltung (162), eine Stromschutzschaltung (163) und eine Schnittstellenschutzschaltung (166) umfasst, wobei:
die Stromschutzschaltung (163) so konfiguriert ist, dass sie Überspannungsschutz und Überstromschutz an der Schnittstellenplatte (16) durchführt;
die Busspannungsstabilisierungsschaltung (162) so konfiguriert ist, dass sie die externen Spannungssignale stabilisiert, um Busspannungssignale zu erhalten;
die Heizschaltung (161) so konfiguriert ist, dass sie die Busspannungssignale verwendet, um elektrische Energie an ein Fensterheizblatt (14) zu übertragen; und
die Schnittstellenschutzschaltung (166) so konfiguriert ist, dass sie Störungen der Kommunikationsschnittstelle (165) unterdrückt.

3. Das LiDAR gemäß Anspruch 2, wobei die Schnittstellenplatte (16) ferner eine erste Wärmeableitungskomponente umfasst und die Busspannungsstabilisierungsschaltung (162) über die erste Wärmeableitungskomponente an einer Innenwand des Gehäuses (17) befestigt ist.

4. Der LiDAR gemäß Anspruch 2, wobei die digitale Platte umfasst:
den Hauptcontroller (156), ein Speichergerät (154), eine Überwachungsschaltung (155), eine Taktschaltung (151), die Abtastschaltung (152) und die erste Stromversorgungsschaltung (153), wobei:
das Speichergerät (154) so konfiguriert ist, dass es ein Computerprogramm speichert;
die Überwachungsschaltung (155) so konfiguriert ist, dass sie den Hauptcontroller (156) zurücksetzt, wenn der Hauptcontroller (156) ausfällt;
die Taktschaltung (151) so konfiguriert ist, dass sie Taktsignale erzeugt;
die Abtastschaltung (152) so konfiguriert ist, dass sie die zweiten elektrischen Signale gemäß den Taktsignalen abtastet, um die Abtastsignale zu erhalten;
der Hauptcontroller (156) so konfiguriert ist, dass er das Computerprogramm aufruft, um die Abtastsignale zu verarbeiten und das gescannte Bild zu erhalten; und
die erste Stromversorgungsschaltung (153) so konfiguriert ist, dass sie die Busspannungssignale in eine Vielzahl von Arbeitsspannungssignalen mit unterschiedlichen Spannungswerten umwandelt und die Vielzahl von Arbeitsspannungssignalen jedem Schaltkreis in der digitalen Platte (15) bereitstellt.

5. Das LiDAR gemäß Anspruch 1, wobei die digitale Platte (15) einen analogen Signalbereich und einen digitalen Signalbereich umfasst; eine Taktschaltung (151), eine Abtastschaltung (152) und eine erste Stromversorgungsschaltung (153) sind im analogen Signalbereich positioniert, und ein Hauptcontroller (156), ein Speicher und eine Überwachungsschaltung (155) sind im digitalen Signalbereich positioniert.

6. Das LiDAR gemäß Anspruch 4 oder 5, wobei die digitale Platte (15) ferner eine zweite Wärmeableitungskomponente umfasst; wobei der Hauptcontroller (156), die Abtastschaltung (152) und die erste Stromversorgungsschaltung (153) über die zweite Wärmeableitungskomponente an einer Innenwand des Gehäuses (17) befestigt sind.

7. Das LiDAR gemäß Anspruch 2, wobei die analoge Platte (13) eine Sendestromversorgungsschaltung (130), eine Echokonditionierungsschaltung (131), eine Empfangsstromversorgungsschaltung (132), eine Galvanometer-Antriebsschaltung (133), eine zweite Stromversorgungsschaltung (135) und eine Steuereinheit (134) umfasst, wobei:
die zweite Stromversorgungsschaltung (135) so konfiguriert ist, dass sie die Busspannungssignale in erste Spannungssignale umwandelt undzweite Spannungssignale;
die Sendestromversorgungsschaltung (130) ist so konfiguriert, dass sie die ersten Spannungssignale verwendet, um die Sendeplatte (10) mit Strom zu versorgen;
die Empfangsstromversorgungsschaltung (132) ist so konfiguriert, dass sie die zweiten Spannungssignale verwendet, um die Empfangsplatte (11) mit Strom zu versorgen;
die Echokonditionierungsschaltung (131) ist so konfiguriert, dass sie die ersten elektrischen Signale von der Empfangsplatte (11) empfängt und die ersten elektrischen Signale konditioniert, um die zweiten elektrischen Signale zu erhalten;
die Steuereinheit (134) ist so konfiguriert, dass sie Galvanometer-Antriebssignale erzeugt und die Galvanometer-Antriebssignale an die Galvanometer-Antriebsschaltung (133) sendet; und
die Galvanometer-Antriebsschaltung (133) ist so konfiguriert, dass sie den Ablenkwinkel des Galvanometers (12) entsprechend den Galvanometer-Antriebssignalen einstellt.

8. Das LiDAR nach Anspruch 7, wobei die analoge Platte (13) einen digitalen Signalbereich und einen analogen Signalbereich umfasst;
wobei die Steuereinheit (134) im digitalen Signalbereich positioniert ist, die Sendestromversorgungsschaltung (130), die Echokonditionierungsschaltung (131), die Empfangsstromversorgungsschaltung (132), die Galvanometer-Antriebsschaltung (133) und die zweite Stromversorgungsschaltung (135) im analogen Signalbereich positioniert sind.

9. Das LiDAR gemäß Anspruch 1, das außerdem eine dritte Wärmeableitungskomponente umfasst, wobei:
eine Leiterplatte der Emissionsplatte (10) über die dritte Wärmeableitungskomponente an einer Innenwand des Gehäuses (17) befestigt ist, die Emissionsplatte (10) über ein flexibles Flachkabel mit der analogen Platte (13) verbunden ist und ein Material der Leiterplatte der Emissionsplatte (10) Keramik ist.

10. Das LiDAR gemäß Anspruch 1, wobei eine erste Abschirmabdeckung an der Emissionsplatte (10) vorgesehen ist und so konfiguriert ist, dass sie die Emissionsplatte (10) elektromagnetisch abschirmt.

11. LiDAR nach Anspruch 1, wobei an der Empfangsplatte (11) eine zweite Abschirmabdeckung vorgesehen ist, die dazu konfiguriert ist, die Empfangsplatte (11) elektromagnetisch abzuschirmen, und die Empfangsplatte (11) ferner einen Signalverstärker umfasst, der dazu konfiguriert ist, die ersten elektrischen Signale zu verstärken.

## Revendications

1. Un LiDAR, comprenant : un boîtier (17), une plaque analogique (13), une plaque numérique (15), une plaque émettrice (10), une plaque réceptrice (11), un galvanomètre (12) et une plaque d'interface (16), **caractérisé en ce que** :
la plaque analogique (13), la plaque numérique (15), la plaque émettrice (10), la plaque réceptrice (11) et la plaque d'interface (16) sont disposées sous forme de plaques séparées ;
la plaque analogique (13), la plaque numérique (15), la plaque émettrice (10) et la plaque réceptrice (11) sont disposées à l'intérieur du boîtier (17) ;
la plaque émettrice (10) est configurée pour émettre un laser émergent et est fixée à un fond du boîtier (17) ;
la plaque de réception (11) est configurée pour recevoir un laser réfléchi formé par le laser émergent réfléchi par un objet cible, et convertir le laser réfléchi en premiers signaux électriques ; le galvanomètre (12) est configuré pour dévier directionnellement le laser émergent ;
la plaque analogique (13) est configurée pour commander un angle de déviation du galvanomètre (12) et conditionner les premiers signaux électriques en seconds signaux électriques, et est positionnée sous la plaque numérique (15) ;
la plaque numérique (15) est configurée pour échantillonner les seconds signaux électriques afin d'obtenir des signaux d'échantillonnage et générer une image numérisée sur la base des signaux d'échantillonnage, un contrôleur principal (156), un circuit d'échantillonnage (152) et un premier circuit d'alimentation électrique (153) sur la plaque numérique (15) sont fixés à une surface supérieure du boîtier (17) ; et
la plaque d'interface (16) comprend une interface de communication (165) et une interface d'alimentation (164), l'interface de communication (165) configurée pour communiquer avec un appareil externe, et l'interface d'alimentation (164) configurée pour recevoir des signaux de tension externes, dans lequel un circuit de stabilisation de tension de bus (162) de la plaque d'interface (16) est fixé sur un côté du boîtier (17).

2. LiDAR selon la revendication 1, dans lequel la plaque d'interface (16) comprend en outre un circuit de chauffage (161), le circuit de stabilisation de tension de bus (162), un circuit de protection de puissance (163) et un circuit de protection d'interface (166). ), dans lequel :
le circuit de protection de puissance (163) est configuré pour effectuer une protection contre les surtensions et une protection contre les surintensités sur la plaque d'interface (16) ;
le circuit de stabilisation de tension de bus (162) est configuré pour stabiliser les signaux de tension externes afin d'obtenir des signaux de tension de bus ;
le circuit de chauffage (161) est configuré pour utiliser les signaux de tension de bus pour transmettre de l'énergie électrique à une feuille chauffante de fenêtre (14) ; et
le circuit de protection d'interface (166) est configuré pour supprimer les interférences de l'interface de communication (165).

3. LiDAR selon la revendication 2, dans lequel la plaque d'interface (16) comprend en outre un premier composant de dissipation thermique, et le circuit de stabilisation de tension de bus (162) est fixé à une paroi interne du boîtier (17) via le premier composant de dissipation thermique.

4. LiDAR selon la revendication 2, dans lequel la plaque numérique comprend :
le contrôleur principal (156), un dispositif de stockage (154), un circuit de surveillance (155), un circuit d'horloge (151), le circuit d'échantillonnage (152) et le premier circuit d'alimentation (153), dans lequel :
le dispositif de stockage (154) est configuré pour stocker un programme informatique ;
le circuit de surveillance (155) est configuré pour réinitialiser le contrôleur principal (156) lorsque le contrôleur principal (156) tombe en panne ;
le circuit d'horloge (151) est configuré pour générer des signaux d'horloge ;
le circuit d'échantillonnage (152) est configuré pour échantillonner les seconds signaux électriques en fonction des signaux d'horloge afin d'obtenir les signaux d'échantillonnage ;
le contrôleur principal (156) est configuré pour appeler le programme informatique afin de traiter les signaux d'échantillonnage afin d'obtenir l'image numérisée ; et
le premier circuit d'alimentation (153) est configuré pour convertir les signaux de tension de bus en une pluralité de signaux de tension de fonctionnement avec différentes valeurs de tension, et
fournir la pluralité de signaux de tension de fonctionnement à chaque circuit dans la plaque numérique (15).

5. LiDAR selon la revendication 1, dans lequel la plaque numérique (15) comprend une région de signal analogique et une région de signal numérique ;
un circuit d'horloge (151), un circuit d'échantillonnage (152) et un premier circuit d'alimentation électrique (153) sont positionnés dans la région de signal analogique, et un contrôleur principal (156), une mémoire et un circuit de surveillance (155) sont positionné dans la région du signal numérique.

6. LiDAR selon la revendication 4 ou 5, dans lequel la plaque numérique (15) comprend en outre un deuxième composant de dissipation thermique ;
dans lequel le contrôleur principal (156), le circuit d'échantillonnage (152) et le premier circuit d'alimentation électrique (153) sont fixés à une paroi interne du boîtier (17) via le deuxième composant de dissipation thermique.

7. LiDAR selon la revendication 2, dans lequel la plaque analogique (13) comprend un circuit d'alimentation électrique émetteur (130), un circuit de conditionnement d'écho (131), un circuit d'alimentation électrique récepteur (132), un circuit de commande de galvanomètre (133), un deuxième circuit d'alimentation (135) et une unité de commande (134), dans lequel :
le deuxième circuit d'alimentation (135) est configuré pour convertir les signaux de tension de bus en premiers signaux de tension et des seconds signaux de tension ;
le circuit d'alimentation électrique émetteur (130) est configuré pour utiliser les premiers signaux de tension pour alimenter la plaque émettrice (10) ;
le circuit d'alimentation électrique réception (132) est configuré pour utiliser les seconds signaux de tension pour alimenter la plaque réceptrice (11) ;
le circuit de conditionnement d'écho (131) est configuré pour recevoir les premiers signaux électriques provenant de la plaque réception (11), et conditionner les premiers signaux électriques pour obtenir les seconds signaux électriques ;
l'unité de commande (134) est configurée pour générer des signaux de commande de galvanomètre et envoyer les signaux de commande de galvanomètre au circuit de commande de galvanomètre (133) ; et
le circuit de commande du galvanomètre (133) est configuré pour ajuster l'angle de déviation du galvanomètre (12) en fonction des signaux de commande du galvanomètre.

8. LiDAR selon la revendication 7, dans lequel la plaque analogique (13) comprend une région de signal numérique et une région de signal analogique ;
dans lequel l'unité de commande (134) est positionnée dans la région du signal numérique, le circuit d'alimentation électrique émetteur (130), le circuit de conditionnement d'écho (131), le circuit d'alimentation électrique récepteur (132), le circuit de commande de galvanomètre (133), et le deuxième circuit d'alimentation (135) est positionné dans la région du signal analogique.

9. LiDAR selon la revendication 1, comprenant en outre un troisième composant de dissipation thermique, dans lequel :
une carte de circuit imprimé de la plaque émettrice (10) est fixée à une paroi interne du boîtier (17) via le troisième composant de dissipation thermique, la plaque émettrice (10) est connectée à la plaque analogique (13) via un câble plat flexible , et un matériau de la carte de circuit imprimé de la plaque émettrice (10) est de la céramique.

10. LiDAR selon la revendication 1, dans lequel un premier couvercle de blindage est prévu au niveau de la plaque émettrice (10) et configuré pour protéger électromagnétiquement la plaque émettrice (10).

11. LiDAR selon la revendication 1, dans lequel un deuxième couvercle de blindage est prévu au niveau de la plaque réception (11) et configuré pour protéger électromagnétiquement la plaque réception (11), et la plaque réception (11) comprend en outre un amplificateur de signal configuré pour amplifier les premiers signaux électriques.
